(19)

Europäisches
Patentamt
European
Patent Office
Office européen
des brevets

(11) EP 2 759 746 A1

(12) EUROPEAN PATENT APPLICATION
published in accordance with Art. 153(4) EPC

(43) Date of publication:
30.07.2014 Bulletin 2014/31

(51) Int Cl.:
F16H 61/02 (2006.01)

(21) Application number: 11872867.4

(22) Date of filing: 22.09.2011

(86) International application number:
PCT/JP2011/071688

(87) International publication number:
WO 2013/042259 (28.03.2013 Gazette 2013/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: Toyota Jidosha Kabushiki Kaisha
Toyota-shi, Aichi 471-8571 (JP)

(72) Inventors:
• ARATSU, Yuki
Toyota-shi
Aichi 471-8571 (JP)

• MURAKAMI, Akira
Toyota-shi
Aichi 471-8571 (JP)

• OGAWA, Hiroyuki
Toyota-shi
Aichi 471-8571 (JP)

• TOMOMATSU, Daisuke
Toyota-shi
Aichi 471-8571 (JP)

(74) Representative: Albutt, Anthony John
D Young & Co LLP
120 Holborn
London EC1N 2DY (GB)

(54) CONTINUOUSLY VARIABLE TRANSMISSION

(57) Provided is a continuously variable transmission
mechanism of a traction drive type having: a shaft (60)
which functions as the center of rotation; relatively rotat-
able first and second rotating members (10, 20) that are
disposed to face each other on the shaft (60) and share
a first rotation center axis (R1); plural planetary balls (50)
that have a second rotation center axis (R2), are radially
disposed around the first rotation center axis (R1) as the
center, and are held between the first and second rotating
members (10, 20); and an iris plate (80) that changes the
gear ratio between an engine-side input shaft (11) and a
drive wheel side output shaft (21) by tilting each of the
planetary balls (50) with respect to the first rotation center
axis (R1). When an engine is started, the gear ratio is
controlled to an acceleration side rather than maximum
deceleration.

FIG. 1

## Description

TECHNICAL FIELD

The present invention relates to a continuously variable transmission apparatus of a traction drive type that includes: first and second rotating elements sharing a first rotation center axis; and plural rolling members radially disposed around the first rotation center axis and having a second rotation center axis, and that continuously changes a gear ratio between an input side and an output side by tilting the each rolling member held between the first rotating element and the second rotating element.

BACKGROUND ART

As one kind of the continuously variable transmission apparatus of the traction drive type, a continuously variable transmission apparatus of a toroidal type has conventionally been known that includes an input disc functioning as the first rotating element, an output disc functioning as the second rotating element, and a power roller functioning as the rolling member.

Patent Document 1 discloses a continuously variable transmission apparatus of the toroidal type that controls a traction oil supply mechanism when a preliminary operation for an engine start, such as insertion of an ignition key, is detected and that supplies the traction oil before the engine start by driving an electric motor of the supply mechanism.

Patent Document 2 discloses a technique to prevent a continuously variable transmission apparatus from being driven in an insufficient lubricated condition by providing a clutch to an input side and an output side of the continuously variable transmission apparatus of the toroidal type and disengaging the clutch on the input side during the engine start. Patent Document 2 further discloses a technique to prevent the continuously variable transmission apparatus from being driven in the insufficient lubricated condition regardless of whether the engine is started or not by disengaging the clutches on the input side and the output side when a vehicle is towed by another vehicle. Patent Document 3 discloses a technique to provide a hydraulic starting clutch in an output side of a continuously variable transmission apparatus of the toroidal type, control a gear ratio of the continuously variable transmission apparatus to an acceleration side when a vehicle cannot be started due to engagement failure of the starting clutch, and engage the starting clutch by utilizing centrifugal hydraulic pressure thereof. Patent Document 4 discloses a technique to suppress vibration of a vehicle body by controlling a gear ratio of a continuously variable transmission apparatus of the toroidal type to an acceleration side from a gear ratio during a vehicle start within a non-traveling range such as an N range so as to increase inertia of the continuously variable transmission apparatus. Patent Document 5 discloses a technique to increase a speed of changing a gear ratio of a continuously variable transmission apparatus of the toroidal type to a target gear ratio when a brake pedal operation by a driver is detected and increase a reduction gear ratio until a vehicle stop in order to prepare for the next start.

Furthermore, another kind of the continuously variable transmission apparatus of the traction drive type has been known that includes a so-called traction planetary gear mechanism (continuously variable transmission mechanism of a ball planetary type) having: a transmission apparatus shaft coaxial with a first rotation center axis; a first rotating member (first disc or first ring) functioning as the first rotating element; a second rotating member (second disc or second ring) functioning as the second rotating element; rolling members (planetary balls) functioning as the rolling members; a third rotating element (sun roller) having an outer peripheral surface on which the each rolling member is disposed; and a holding element (carrier) that holds the each rolling member.

PRIOR ART DOCUMENTS

PATENT DOCUMENTS

Patent Document 1: Japanese Patent Application Publication No. 2007-032774 (JP 2007-032774 A)
Patent Document 2: Japanese Patent Application Publication No. 05-280627 (JP 05-280627 A)
Patent Document 3: Japanese Patent Application Publication No. 62-171556 (JP 62-171556 A)
Patent Document 4: Japanese Patent Application Publication No. 11-063183 (JP 11-063183 A)
Patent Document 5: Japanese Patent Application Publication No. 10-184837 (JP 10-184837 A)

SUMMARY OF THE INVENTION

PROBLEM TO BE SOLVED BY THE INVENTION

In the continuously variable transmission apparatus of the traction drive type, because power is transmitted through an oil film of lubricating oil between two rotating bodies that are the rotating element and the rolling member, the lubricating oil having at least a specified film thickness (requisite minimum oil film thickness) has to be interposed therebetween for smooth power transmission. However, the minimum oil film thickness becomes smaller between the rotating element and the rolling member with a decrease in a peripheral velocity of the rotating element. Thus, when the peripheral velocity is low, the accumulated number of contacts at one point of the rotating element with the each rolling member is increased until the requisite minimum oil film thickness is secured. This indicates that a relationship between the peripheral velocity of the rotating element and the minimum oil film thickness is not considered for a conventional continuously variable transmission apparatus and that durability thereof may be degraded.

The present invention therefore has an object to provide a continuously variable transmission apparatus with which inconvenience inherent to the above conventional example can be solved and durability thereof can be improved.

MEANS FOR SOLVING THE PROBLEM

In order to achieve the above object, the present invention includes a continuously variable transmission mechanism of a traction drive type having: a transmission apparatus shaft serving as a center of rotation; first and second rotating elements disposed to face each other on the transmission apparatus shaft, sharing a first rotation center axis, and capable of relative rotation; plural rolling members having a second rotation center axis, radially disposed around the first rotation center axis, and held by the first and second rotating elements; and a transmission device for changing a gear ratio between an input shaft on an engine side and an output shaft on a drive wheel side by tilting the each rolling member with respect to the first rotation center axis, and is characterized that the engine is started at the gear ratio in an acceleration side from maximum deceleration.

Here, the gear ratio is desirably controlled to the acceleration side in a period from ignition-on to the engine start.

In addition, the gear ratio is desirably controlled to the acceleration side in a period from an engine stop to the ignition-on or before the engine stop.

The continuously variable transmission mechanism is desirably a continuously variable transmission mechanism of a ball planetary type that further includes: a support shaft for the rolling member that has the second rotation center axis and both ends of which are projected from the rolling member; a third rotating element that has an outer peripheral surface on which the each rolling member is disposed and is capable of relative rotation to the transmission apparatus shaft and the first and second rotating elements; and a fourth rotating element that holds the rolling member in a freely tilting manner via projected sections of the support shaft and is capable of relative rotation to the transmission apparatus shaft and the first to third rotating elements.

The continuously variable transmission mechanism is desirably a continuously variable transmission mechanism or a full toroidal type or a half toroidal type.

Furthermore, the gear ratio is desirably controlled to a deceleration side in a period from an engine start to a vehicle start.

Here, the gear ratio is desirably controlled to the deceleration side when an engine speed exceeds a specified speed.

The gear ratio is desirably controlled to the deceleration side after a lapse of a specified period from the engine start.

The gear ratio is desirably controlled to the deceleration side when a peripheral velocity of the first rotating element exceeds a specified velocity, when a peripheral velocity of the second rotating element exceeds the specified velocity, when a peripheral velocity of the third rotating element exceeds the specified velocity, or when a peripheral velocity of the rolling member exceeds the specified velocity in the period from the engine start to the vehicle start.

The gear ratio is desirably controlled to the deceleration side when the peripheral velocity of the first rotating element exceeds the specified velocity, when the peripheral velocity of the second rotating element exceeds the specified velocity, or when the peripheral velocity of the rolling member exceeds the specified velocity in the period from the engine start to the vehicle start.

The gear ratio is desirably controlled to the deceleration side when an oil film thickness between the first rotating element and the each rolling member becomes larger than a specified value, when an oil film thickness between the second rotating element and the each rolling member becomes larger than the specified value, or when an oil film thickness between the third rotating element and the each rolling member becomes larger than the specified value in the period from the engine start to the vehicle start.

Each of the oil film thicknesses is desirably calculated on the basis of a function with an average of the peripheral velocity of the first rotating element and the peripheral velocity of the rolling member as a parameter, a function with an average of the peripheral velocity of the second rotating element and the peripheral velocity of the rolling member as a parameter, or a function with an average of the peripheral velocity of the third rotating element and the peripheral velocity of the rolling member as a parameter.

The gear ratio is desirably controlled to the deceleration side when the oil film thickness between the first rotating element and the each rolling member becomes larger than the specified value or when the oil film thickness between the second rotating element and the each rolling member becomes larger than the specified value in the period from the engine start to the vehicle start.

Each of the oil film thicknesses is desirably calculated on the basis of the function with the average of the peripheral velocity of the first rotating element and the peripheral velocity of the rolling member as the parameter or the function with the average of the peripheral velocity of the second rotating element and the peripheral velocity of the rolling member.

A clutch that can connect or disconnect torque is desirably provided between the output shaft and the drive wheel.

Here, during the engine start, the gear ratio is desirably controlled to the acceleration side from the gear ratio immediately before beginning of the engine start.

EFFECT OF THE INVENTION

In the continuously variable transmission apparatus according to the present invention, when the engine is started at the gear ratio in the acceleration side from the maximum deceleration, the peripheral velocity of the rolling member is increased, and thus the accumulated number of contacts of the first rotating element with the each rolling member or the accumulated number of contacts of the second rotating element with the each rolling member can be reduced. Accordingly, a lubricated condition therebetween can realize a fluid lubrication region with the reduced accumulated number of contacts. Therefore, it is possible to improve durability of the continuously variable transmission apparatus.

BRIEF DESCRIPTION OF THE DRAWINGS

[FIG. 1] FIG. 1 is a partial cross-sectional view for showing a structure of an embodiment of a continuously variable transmission apparatus that includes a continuously variable transmission mechanism of a ball planetary type according to the present invention.
[FIG. 2] FIG. 2 is a view for illustrating a guide section of a support shaft in a carrier.
[FIG. 3] FIG. 3 is a view for illustrating an iris plate.
[FIG. 4] FIG. 4 is a graph for explaining a relationship between a peripheral velocity and a minimum oil film thickness.
[FIG. 5] FIG. 5 is a view for illustrating a schematic structure of a drive train in which the continuously variable transmission apparatus is mounted.
[FIG. 6] FIG. 6 is a graph for showing an example of a characteristic at an engine start.
[FIG. 7] FIG. 7 is a graph for showing a relationship between the accumulated number of contacts and the minimum oil film thickness in the characteristic at the start in FIG. 6 per gear ratio.
[FIG. 8] FIG. 8 is a flowchart for explaining gear change control of the continuously variable transmission apparatus according to this embodiment.
[FIG. 9] FIG. 9 is a time chart for explaining the gear change control of the continuously variable transmission apparatus according to this embodiment.
[FIG. 10] FIG. 10 is a view for illustrating an effect of reducing the accumulated number of contacts, which is achieved by acceleration control of the gear ratio in this embodiment.
[FIG. 11] FIG. 11 is a flowchart for explaining the gear change control according to a modified embodiment in the continuously variable transmission apparatus of the embodiment.
[FIG. 12] FIG. 12 is a time chart for explaining the gear change control according to the modified embodiment in the continuously variable transmission apparatus of the embodiment.
[FIG 13] FIG. 13 is a view for illustrating the effect of reducing the accumulated number of contacts, which is achieved by deceleration control of the gear ratio in the modified embodiment.
[FIG. 14] FIG. 14 is a view for showing an example of a characteristic at the engine stop.
[FIG. 15] FIG. 15 is a view for illustrating the effect of reducing the accumulated number of contacts, which is achieved by the acceleration control of the gear ratio in the modified embodiment.
[FIG. 16] FIG. 16 is a view for showing another example of the characteristic at the engine start.
[FIG. 17] FIG. 17 is a schematic view for showing a structure of a continuously variable transmission apparatus that includes a continuously variable transmission mechanism of a toroidal type according to the present invention.

MODES FOR CARRYING OUT THE INVENTION

A detailed description will hereinafter be made on an embodiment of a continuously variable transmission apparatus according to the present invention with reference to the accompanying drawings. It should be noted that the invention is not limited to this embodiment.

[Embodiment]

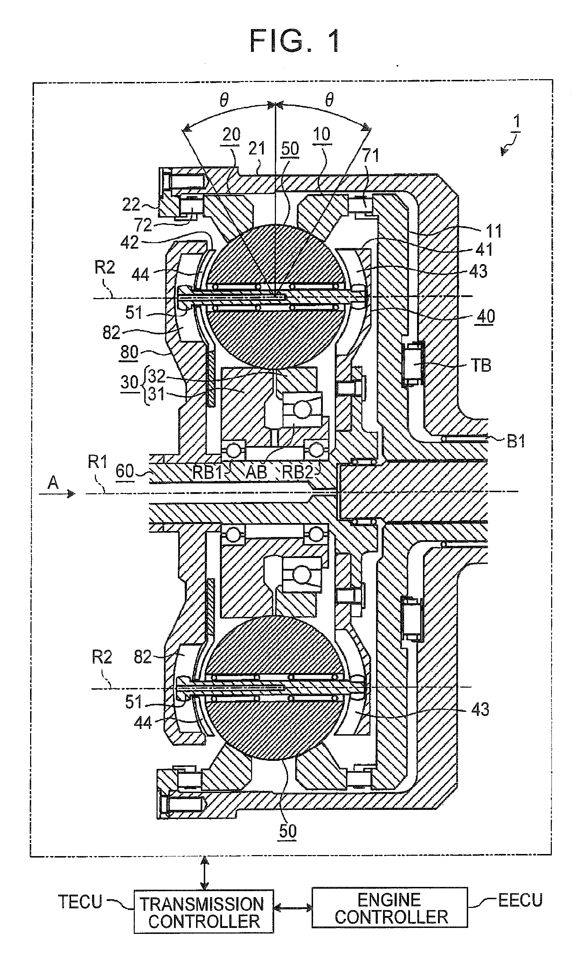

The embodiment of the continuously variable transmission apparatus according to the present invention will be described with reference to FIG. 1 to FIG. 17.
First, a description will be made on an example of a continuously variable transmission apparatus of a traction drive type in this embodiment with reference to FIG. 1. The continuously variable transmission apparatus that includes a traction planetary gear mechanism (continuously variable transmission mechanism of a ball planetary type) will be described in this embodiment. A reference numeral 1 in FIG. 1 indicates the continuously variable transmission apparatus in this embodiment.
A continuously variable transmission mechanism of a traction drive type (traction planetary gear mechanism) that serves as a primary component of the continuously variable transmission apparatus 1 includes: first to fourth rotating elements 10, 20, 30, 40 that share a first rotation center axis R1 and are capable of relative rotation and; plural rolling members 50 that are radially disposed around the first rotation center axis R1 and each have another second rotation center axis R2 parallel with the first rotation center axis R1 in a reference position, which will be described later; and a shaft 60 that functions as a transmission apparatus shaft disposed at the center of rotation of the first to fourth rotating elements 10, 20, 30, 40. In the continuously variable transmission apparatus 1, a gear ratio $\gamma$ between an input side and an output side is changed by inclining the second rotation center axis R2 with respect to the first rotation center axis R1 and tilting the rolling members 50. Unless otherwise specified, a parallel direction with the first rotation center axis R1 and the second rotation center axis R2 will hereinafter be referred to as an axial direction, and a direction around the first rotation center axis R1 will hereinafter be referred to as a circumferential direction. In addition, a direction orthogonal to the first rotation center axis R1 will be referred to as a radial direction, and an inward side thereof is referred to as an inward radial direction while an outward side thereof is referred to as an outward radial direction.

In the continuously variable transmission apparatus 1, the each rolling member 50 is held by the first rotating element 10 and the second rotating element 20 that are disposed to face each other, the each rolling member 50 is disposed on an outer peripheral surface of the third rotating element 30, and the fourth rotating element 40 holds the each rolling member 50 in a freely tilting manner. In the continuously variable transmission apparatus 1, any one of the first to fourth rotating elements 10, 20, 30, 40 may be a stationary element incapable of relative rotation to the shaft 60. The shaft 60 is fixed to a stationary part of the continuously variable transmission apparatus 1 such as a housing or a vehicle body, which is not shown, and is a cylindrical or columnar fixed shaft incapable of relative rotation to the stationary part.

In the continuously variable transmission apparatus 1, torque is transferred via the each rolling member 50 among the first to fourth rotating elements 10, 20, 30, 40 other than the rotating element that is the stationary element. Accordingly, one of the first to fourth rotating elements 10, 20, 30, 40 other than the rotating element that is the stationary element functions as a torque (power) input section while another thereof functions as a torque output section. Thus, in the continuously variable transmission apparatus 1, a ratio of a rotational speed (number of revolutions) between any one of the rotating elements functioning as the input section and another of the rotating elements functioning as the output section is set as the gear ratio $\gamma$. For example, the continuously variable transmission apparatus 1 is disposed on a power transmission path in a vehicle. In this case, the input section thereof is connected to a power source such as an engine, a motor, or the like while the output section thereof is connected to drive wheels. In the continuously variable transmission apparatus 1, a rotating motion of each of the rotating elements when torque is input to the rotating element as the input section is referred to as normal drive, and the rotating motion of each of the rotating elements when reverse torque whose direction is opposite from the torque during the normal drive is input to the rotating element as the output section is referred to as reverse drive. For example, in the continuously variable transmission apparatus 1, according to an example of the above vehicle, the normal drive is established when torque from the power source is input to the rotating element as the input section and rotates the rotating element, such as during acceleration, and the reverse drive is established when the reverse torque whose direction is opposite from the torque during the normal drive is input from the drive wheels to the rotating element that is rotating as the output section, such as during deceleration.

In the continuously variable transmission apparatus 1, an appropriate tangential force (traction force) is generated between the rolling member 50 and each of the first to third rotating elements 10, 20, 30 by pressing at least one of the first and second rotating elements 10, 20 against the rolling member 50. In addition, in the continuously variable transmission apparatus 1, the ratio of the rotational speed (number of revolutions) between the input side and the output side is changed by tilting the each rolling member 50 in a tilt plane that includes the second rotation center axis R2 thereof and the first rotation center axis R1.

Here, in the continuously variable transmission apparatus 1, each of the first and second rotating elements 10, 20 functions as a ring gear in the traction planetary gear mechanism. The third rotating element 30 and the fourth rotating element 40 respectively function as a sun roller and a carrier in the traction planetary gear mechanism. The rolling member 50 functions as a ball-type pinion in the traction planetary gear mechanism. The first and second rotating elements 10, 20 will hereinafter be referred to as the "first and second rotating members 10, 20". The third rotating element 30 will be referred to as the "sun roller 30", and the fourth rotating element 40 will be referred to as the "carrier 40". The rolling member 50 will be referred to as the "planetary ball 50". In the following example, the carrier 40 serves as the stationary element and is fixed to the shaft 60.

The first and second rotating members 10, 20 are disc members (discs) or annular members (rings) whose central axes correspond to the first rotation center axis R1, are disposed to face each other in the axial direction, and hold the each planetary ball 50 therebetween. In this example, they are both the annular members.

Each of the first and second rotating members 10, 20 has a contact surface that contacts an outer peripheral curved surface of the each planetary ball 50 in the outward radial direction, which will be described later. The each contact surface is, for example, shaped in a concave arc surface whose curvature is same as that of the outer peripheral curved surface of the planetary ball 50, a concave arc surface whose curvature differs from that of the outer peripheral curved surface, a convex arc surface, a flat surface, or the like. Here, the each contact surface is formed such that, when in the reference position, which will be described later, distances from the first rotation center axis R1 to a contact point with the planetary ball 50 is the same, and contact angles $\theta$ of the first and second rotating members 10, 20 with the planetary ball 50 are the same. The contact angle θ is an angle from a reference to the contact point with the each planetary ball 50. Here, the radial direction is set as the reference. The each contact surface is brought into point contact or surface contact with the outer peripheral curved surface of the planetary ball 50. In addition, the each contact surface is formed such that, when an axial force (pressing force) is applied from the first and second rotating members 10, 20 to the planetary ball 50, a force (normal force) in the inward radial direction and an oblique direction is applied to the planetary ball 50.

In this example, the first rotating member 10 acts as the torque input section in the continuously variable transmission apparatus 1 during the normal drive, and the second rotating member 20 acts as the torque output section in the continuously variable transmission apparatus 1 during the normal drive. Accordingly, an input shaft (first rotary shaft) 11 is connected to the first rotating member 10, and an output shaft (second rotary shaft) 21 is connected to the second rotating member 20. The input shaft 11 and the output shaft 21 can rotate relative to the shaft 60 in the circumferential direction. In addition, the input shaft 11 and the output shaft 21 can rotate relative to each other in the circumferential direction via a bearing B1 or a thrust bearing TB.

An axial force generating section 71 that generates the axial force is provided between the input shaft 11 and the first rotating member 10. The axial force is the pressing force to press the first rotating member 10 against the each planetary ball 50. Here, a torque cam is used as the axial force generating section 71. Accordingly, when an engagement member on the input shaft 11 side is engaged with an engagement member on the first rotating member 10 side, the axial force generating section 71 generates the axial force between the input shaft 11 and the first rotating member 10 and transfers rotational torque for integral rotation thereof. Meanwhile, an axial force generating section 72 that generates the pressing force (axial force) to press the second rotating member 20 against the each planetary ball 50 is disposed between the output shaft 21 and the second rotating member 20. The torque cam that is similar to the axial force generating section 71 is used for the axial force generating section 72. The axial force generating section 72 is connected to the output shaft 21 via an annular member 22.

In the continuously variable transmission apparatus 1, lubricating oil in an oil pan that is located below is scraped up by the rotation of the first rotating member 10 and the second rotating member 20. The scraped-up lubricating oil is either directly supplied or dripped from inner walls of the first and second rotating members 10, 20 and the housing to be supplied between each of the first and second rotating members 10, 20 and the each planetary ball 50 or between the sun roller 30 and the each planetary ball 50, for example.

It should be noted that, in the continuously variable transmission apparatus 1, the first rotating member 10 can function as the torque output section while the second rotating member 20 can function as the torque input section, and in this case, the input shaft 11 is used as the output shaft, and the output shaft 21 is used as the input shaft. In addition, when the sun roller 30 and the carrier 40 are respectively used as the torque input section and the torque output section, an input shaft and an output shaft that are additionally provided are respectively connected to the sun roller 30 and the carrier 40.

The sun roller 30 is disposed coaxially with the shaft 60 and rotates relative to the shaft 60 in the circumferential direction. The plural planetary balls 50 are radially disposed on an outer peripheral surface of the sun roller 30 at substantially equal intervals. Accordingly, the outer peripheral surface of the sun roller 30 functions as a rolling surface when the planetary ball 50 rotates on its own axis. The sun roller 30 can roll (rotate) the each planetary ball 50 by its own rotating motion or can be rotated along with a rolling motion (rotating motion) of the each planetary ball 50.

In this example, the sun roller 30 is divided into two structures of a first divided structure 31 and a second divided structure 32, and each of the first divided structure 31 and the second divided structure 32 has a contact point with the each planetary ball 50. A reason for this is because surface pressure is lowered by dispersing a contact force between the sun roller 30 and the planetary ball 50 to reduce spin loss, which in turn suppresses degradation of power transmission efficiency and improves durability. The each contact point is located in a position where a distance from center of gravity of the planetary ball 50 is the same and where a distance from the first rotation center axis R1 is also the same.

The first divided structure 31 is attached to the shaft 60 via radial bearings RB1, RB2 and can rotate relative to the shaft 60 in the circumferential direction. For example, the first divided structure 31 may be formed of an integrally molded member, of plural members that are integrally connected by a fixing member such as a bolt or a pin, or of plural members that are integrated by pressure fitting or caulking. The first divided structure 31 has a larger outer diameter on one side than another side in a plane that includes the center of the each planetary ball 50 interposed between the sides. The first divided structure 31 has a contact point with the each planetary ball 50 on the outer peripheral surface with the larger outer diameter. In addition, the second divided structure 32 that has another contact point with the each planetary ball 50 is disposed via an angular bearing AB, for example, on another outer peripheral surface of the first divided structure 31 with the smaller outer diameter. Accordingly, in the continuously variable transmission apparatus 1, the first divided structure 31 and the second divided structure 32 can rotate relative to each other in the circumferential direction and can also suppress degradation of the power transmission efficiency because the angular bearing AB absorbs a thrust load, thereby suppressing energy loss between the sun roller 30 and the planetary ball 50.

The planetary ball 50 is a rolling member that rolls on the outer peripheral surface of the sun roller 30. The planetary ball 50 is preferably a perfect sphere; however, it may be at least spherical in a rolling direction and have an elliptical cross section like a rugby ball, for example. The planetary ball 50 is rotatably supported by a support shaft 51 that penetrates the center thereof. For example, the planetary ball 50 can rotate relative to the support shaft 51 (that is, rotate on its own axis) with the second rotation center axis R2 being its axis of rotation by a bearing that is disposed between the planetary ball 50 and an outer peripheral surface of the support shaft 51. The planetary ball 50 can roll on the outer peripheral surface of the sun roller 30 with the support shaft 51 being the center thereof. Both ends of the support shaft 51 are projected from the planetary ball 50.

As shown in FIG. 1, a reference position of the support shaft 51 is a position where the second rotation center axis R2 is parallel with the first rotation center axis R1. The support shaft 51 can swing (be tilted) together with the planetary ball 50 between the reference position and a position inclined therefrom in a tilt plane that includes its own rotation center axis (second rotation center axis R2) and the first rotation center axis R1 and is formed in the reference position. Tilting is performed in the tilt plane having the center of the planetary ball 50 being a fulcrum.

The carrier 40 holds the each projecting section of the support shaft 51 in a manner not to interfere with tilting of the each planetary ball 50. For example, the carrier 40 has first and second disc sections 41, 42 whose central axes correspond to the first rotation center axis R1. The first and second disc sections 41, 42 face each other and are disposed with a space therebetween in which the sun roller 30 and the planetary balls 50 are disposed. In the carrier 40, at least one inner diameter side of the first and second disc sections 41, 42 is fixed to an outer diameter side of the shaft 60 in order to prevent the relative rotation to the shaft 60 in the circumferential direction and the relative rotation in the axial direction. Here, the carrier 40 is formed in a basket shape by fixing the first disc section 41 to the shaft 60 and connecting the first disc section 41 to the second disc section 42 by plural support shafts, which are not shown.

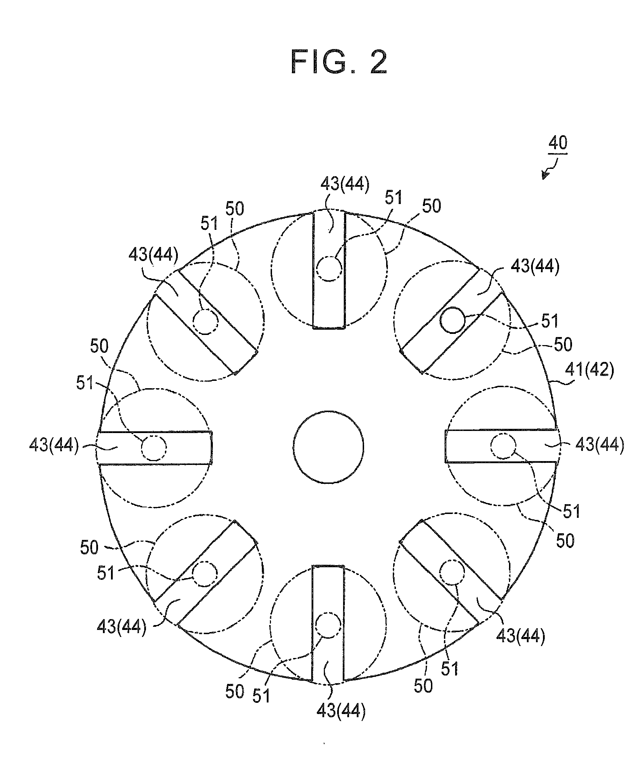

The continuously variable transmission apparatus 1 is provided with guide sections 43, 44 for guiding the support shaft 51 in a tilt direction when the each planetary ball 50 is tilted. In this example, the guide sections 43, 44 are provided in the carrier 40. The guide sections 43, 44 are radial guide grooves or radial guide holes for guiding the support shaft 51 that is projected from the planetary ball 50 in the tilt direction, and are formed for the each planetary ball 50 in portions that respectively face the first and second disc sections 41, 42 (FIG. 2). In other words, all the guide sections 43, 44 are radially formed when seen in the axial direction (in a direction of an arrow A in FIG. 1, for example).

In the continuously variable transmission apparatus 1, when a tilt angle of the each planetary ball 50 is in the reference position, that is, at 0 degree, the first rotating member 10 and the second rotating member 20 rotate at the same rotational speed (same number of revolutions). In other words, at this time, a rotation ratio of the first rotating member 10 to the second rotating member 20 (ratio of the rotational speed or the number of revolutions) is 1, and the gear ratio $\gamma$ is 1. For example, if the rotational speeds of the first and second rotating members 10, 20 are respectively set as "V1" and "V2", the rotational ratio is expressed as "V1/V2". Meanwhile, when the each planetary ball 50 is tilted from the reference position, a distance from the central axis of the support shaft 51 (second rotation center axis R2) to the contact point on the first rotating member 10 varies, and a distance from the central axis of the support shaft 51 to the contact point on the second rotating member 20 also varies. Accordingly, either one of the first rotating member 10 and the second rotating member 20 rotates at a higher speed than when in the reference position, and the other rotates at a lower speed. For example, the second rotating member 20 rotates at the lower speed (is decelerated) than the first rotating member 10 when the planetary ball 50 is tilted to one side, and rotates at the higher speed (is accelerated) than the first rotating member 10 when the planetary ball 50 is tilted to the other side. Thus, in the continuously variable transmission apparatus 1, the rotational ratio (gear ratio $\gamma$) of the first rotating member 10 to the second rotating member 20 is continuously variable by changing the tilt angle. It should be noted that the planetary ball 50 on an upper side in FIG. 1 is tilted counterclockwise of the drawing and that the planetary ball 50 on a lower side is tilted clockwise of the drawing during the acceleration ($\gamma < 1$). On the other hand, during the deceleration ($\gamma > 1$), the planetary ball 50 on the upper side in FIG. 1 is tilted clockwise of the drawing, and the planetary ball 50 on the lower side is tilted counterclockwise of the drawing.

The continuously variable transmission apparatus 1 is provided with a transmission device for changing the gear ratio $\gamma$. Because the gear ratio $\gamma$ varies with a change in the tilt angle of the planetary ball 50, a tilt device for tilting the each planetary ball 50 is used as the transmission device. Here, the transmission device includes a disc-shaped iris plate (tilt element) 80.

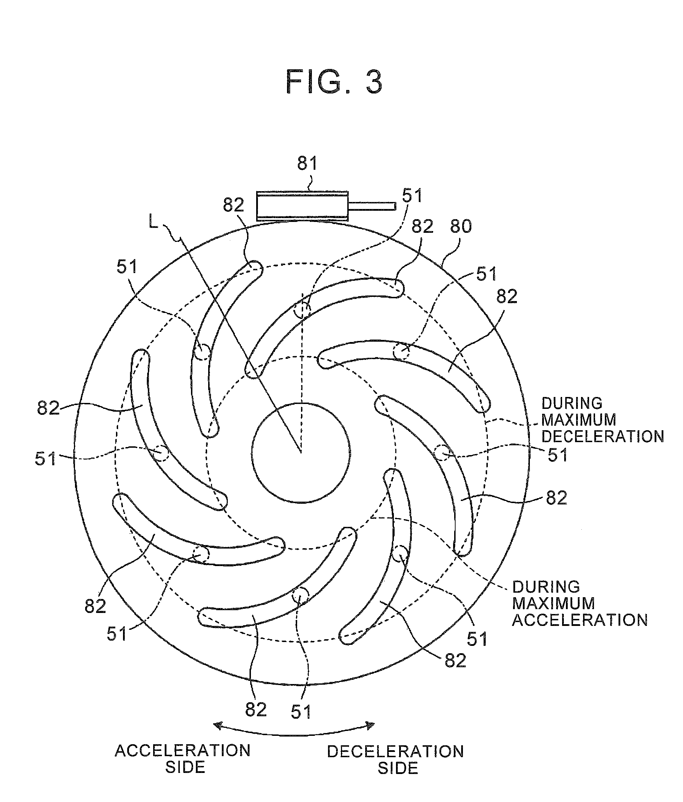

The iris plate 80 is attached to the shaft 60 via a bearing in the inward radial direction, for example, and can rotate relative to the shaft 60 around the first rotation center axis R1. An unillustrated actuator (drive section) such as a motor is used for the relative rotation. A drive force of the drive section is transferred to an outer peripheral portion of the iris plate 80 via a worm gear 81 shown in FIG. 3.

The iris plate 80 is disposed on the input side (contact side with the first rotating member 10) or the output side (contact side with the second rotating member 20) of the each planetary ball 50 and on the outer side or the inner side of the carrier 40. In this example, it is disposed on the output side and the inner side of the carrier 40, that is, between the second disc section 42 and a combination of the sun roller 30 and the each planetary ball 50. The iris plate 80 is formed with a throttle hole (iris hole) 82 in which one of the projecting sections of the support shaft 51 is inserted. When a reference line L is assumed to extend in the radial direction from an end in the inward radial direction as a starting point, the throttle hole 82 has an arc shape that is separated from the reference line L in the circumferential direction as it extends from the inward radial direction to the outward radial direction (FIG. 3). It should be noted that FIG. 3 is a view that is seen in a direction of the arrow A in FIG. 1.

When the iris plate 80 rotates clockwise of the drawing in FIG. 3, the one of the projecting sections of the support shaft 51 moves toward the center of the iris plate 80 by following the throttle hole 82. At this time, because the projecting sections of the support shaft 51 are respectively inserted in the guide sections 43, 44 of the carrier 40, the one of the projecting sections that is inserted in the throttle hole 82 moves in the inward radial direction. Meanwhile, the one of the projecting sections moves toward the outer periphery of the iris plate 80 by following the throttle hole 82 when the iris plate 80 rotates counterclockwise of the drawing in FIG. 3. At this time, the other of the projecting sections moves in the outward radial direction due to actions of the guide sections 43, 44. Just as described, the support shaft 51 can move in the radial direction by the guide sections 43, 44 and the throttle hole 82. Thus, the planetary balls 50 can make a tilt motion, which is described above.

The thus-configured continuously variable transmission apparatus 1 transfers torque between the each planetary ball 50 and a combination of the first and second rotating members 10, 20 and the sun roller 30 via an oil film of the lubricating oil.

Here, a lubricated condition between two rotating bodies whose rolling surfaces contact each other can be evaluated by a film thickness ratio (so-called oil film parameter) $\Lambda$ expressed by the following equation 1. Mean square surface roughnesses of the rotating bodies are represented by "$\sigma1$" and "$\sigma2$".
[Number 1]

$$\Lambda = \frac{h\min}{\sqrt{\sigma1^2 + \sigma2^2}} \quad …(1)$$

In general, when the film thickness ratio A is larger than 3 (A > 3), the lubricated condition between the two rotating bodies becomes a state of fluid lubrication, and the rotating bodies rotate in a non-contact manner via the lubricating oil. On the other hand, when the film thickness ratio A is 3 or smaller (A ≤ 3), the lubricated condition is no longer in the state of fluid lubrication and becomes in a state of boundary lubrication or mixed lubrication where projections of the rotating bodies interfere with each other. Accordingly, it can be understood from the equation 1 that the film thickness ratio A becomes smaller as a minimum oil film thickness hmin is reduced and that the possibility of interference of the projections is increased. Here, the minimum oil film thickness hmin when the film thickness ratio A = 3 is referred to as a boundary minimum oil film thickness hmin0, and the minimum oil film thickness hmin that is thicker than the boundary minimum oil film thickness hmin0 is required as a requisite minimum oil film thickness hmin1 to realize a fluid lubrication region. A relationship between the lubricated condition and the interference of the projections is applicable between the first rotating member 10 and the each planetary ball 50, between the second rotating member 20 and the each planetary ball 50, and between the sun roller 30 and the each planetary ball 50 in the continuously variable transmission apparatus 1.

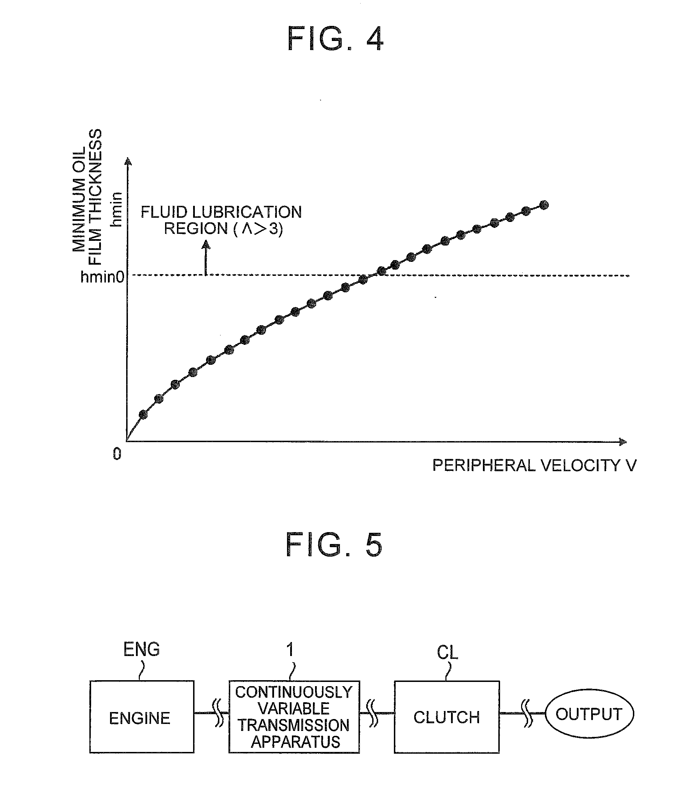

As shown in FIG. 4, in the continuously variable transmission apparatus 1, as the peripheral velocities V of the rotating element and the planetary ball 50 are reduced, the minimum oil film thickness hmin is reduced in a portion therebetween where the rolling surfaces thereof contact each other. FIG. 4 is based on Hamrock-Dawson formula (Yamamoto, Yuji; Kaneta, Motohiro. Tribology. 1998, p. 28 and 124-126. Rikogakusha Publishing, Co., Ltd.), and it is possible by using this formula to obtain the minimum oil film thickness hmin from the peripheral velocities V of the rotating element and the planetary ball 50. In Hamrock-Dawson formula, the oil film thickness is expressed by a function with an average peripheral velocity of two members holding the oil film therebetween as a parameter, that is, a function with an average of the peripheral velocity of the first rotating member 10 and the peripheral velocity of the planetary ball 50 as the parameter, a function with an average of the peripheral velocity of the second rotating member 20 and the peripheral velocity of the planetary ball 50 as a parameter, or a function with an average of the peripheral velocity of the sun roller 30 and the peripheral velocity of the planetary ball 50 as a parameter. For example, the minimum oil film thickness hmin between the first rotating member 10 and the each planetary ball 50 is reduced as the peripheral velocities V of the first rotating member 10 and the each planetary ball 50 are reduced. In addition, the minimum oil film thickness hmin between the second rotating member 20 and the each planetary ball 50 is reduced as the peripheral velocities V of the second rotating member 20 and the each planetary ball 50 are reduced. Furthermore, the minimum oil film thickness hmin between the sun roller 30 and the each planetary ball 50 is reduced as the peripheral velocities V of the sun roller 30 and the each planetary ball 50 are reduced. Especially, in the continuously variable transmission apparatus 1, a frequency of occurrence of the interference of the projections is higher between the sun roller 30 and the each planetary ball 50 than the first rotating member 10 and the second rotating member 20.

In the continuously variable transmission apparatus 1, the interference of the projections occurs therebetween if the peripheral velocities V are low and the minimum oil film thickness hmin does not exceed the boundary minimum oil film thickness hmin0 (that is, the film thickness ratio A is 3 or smaller). In the continuously variable transmission apparatus 1, a longer time is required for the minimum oil film thickness hmin to exceed the boundary minimum oil film thickness hmin0 when the peripheral velocities V are slowly increased; therefore, the frequency of occurrence of the interference of the projections is increased in the each planetary ball 50 at one point on the rolling surface of the rotating element (the first rotating member 10, the second rotating member 20, or the sun roller 30). Thus, it is preferred in the continuously variable transmission apparatus 1 to realize the fluid lubrication region in a short period. The accumulated number of contacts for each is abbreviated as the accumulated number of contacts of the first rotating member 10, the accumulated number of contacts of the second rotating member 20, and the accumulated number of contacts with the sun roller 30.

As shown in FIG 5, the vehicle to which the continuously variable transmission apparatus 1 is applied includes an engine ENG that is connected to the input side of the continuously variable transmission apparatus 1 and a clutch CL that is connected to the output side of the continuously variable transmission apparatus 1. In this vehicle, another clutch or the like may be interposed between the continuously variable transmission apparatus 1 and the engine ENG, for example, and a gear group may be interposed between the continuously variable transmission apparatus 1 and the clutch CL. The clutch CL is engaged when output torque of the engine ENG is transferred to the drive wheels. On the other hand, the clutch CL is disengaged when the engine ENG is started so as to prevent the output torque of the engine ENG that is transferred to the continuously variable transmission apparatus 1 from being transferred to the drive wheels during the start of the engine ENG.

In order to start the vehicle, sufficient drive torque for the start is desirably generated in the drive wheels. Accordingly, during the start of the vehicle, the gear ratio $\gamma$ of the continuously variable transmission apparatus 1 is controlled to the maximum deceleration (that is, a maximum gear ratio $\gamma$max) to secure a sufficient acceleration force. Thus, conventionally, when the vehicle is started from an engine stop condition, the clutch CL is disengaged, and the gear ratio $\gamma$ of the continuously variable transmission apparatus 1 is controlled to the maximum deceleration before the engine ENG is started.

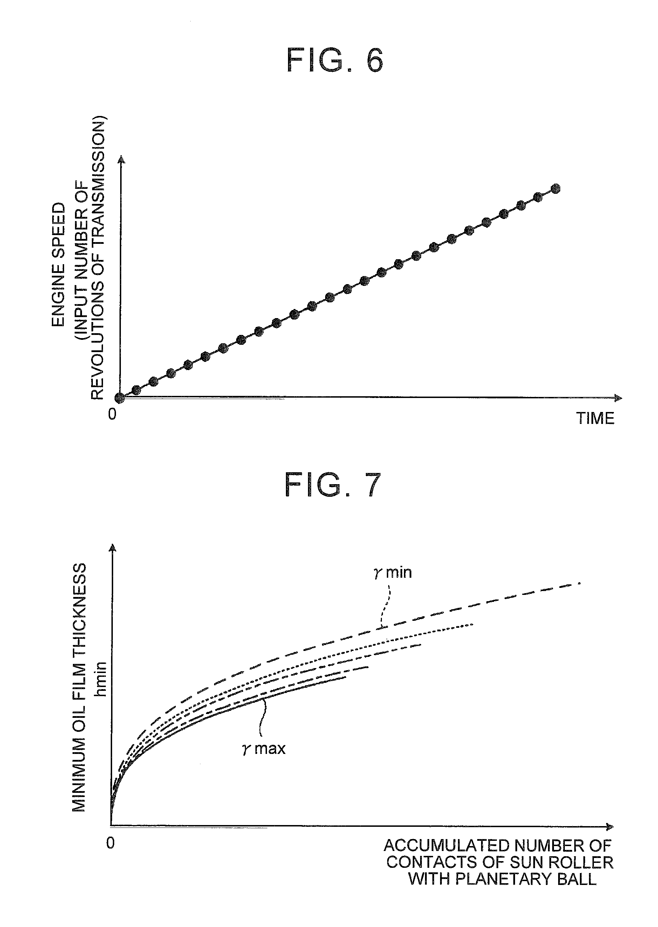

However, when the gear ratio $\gamma$ is at the maximum deceleration, the peripheral velocity V of the second rotating member 20 is the highest, but the peripheral velocities V of the first rotating member 10 and the sun roller 30 are low in comparison with a case where the gear ratio $\gamma$ is in the acceleration side. Thus, if the engine is started from the stop condition as in a conventional mode, the accumulated number of contacts of the first rotating member 10 and that of the sun roller 30 are increased between the first rotating member 10 and the each planetary ball 50 and between the sun roller 30 and the each planetary ball 50 in the continuously variable transmission apparatus 1 as the gear ratio $\gamma$ approximates the deceleration side. For example, FIG. 6 shows an example of a start-up characteristic at the start of the engine ENG. In this embodiment, the characteristic at the start shows that an engine speed (input number of revolutions of the continuously variable transmission apparatus 1) is increased evenly per unit time. FIG. 7 shows an example of a relationship between the minimum oil film thickness hmin and the accumulated number of contacts of the sun roller 30 in the characteristic at the start. FIG. 7 shows the above relationships on the maximum deceleration side (maximum gear ratio $\gamma$max), on the maximum acceleration side (minimum gear ratio $\gamma$min), and at the gear ratio $\gamma$ therebetween.

In the continuously variable transmission apparatus 1 during the engine start, the input torque is gradually increased from 0 during the start of the engine ENG, and the number of revolutions of the input shaft 11, that is, of the first rotating member 10 is in turn gradually increased from 0. During the engine start, the minimum oil film thickness hmin is not substantially changed according to a magnitude of the gear ratio $\gamma$. Thus, engine start control is initiated with the same minimum oil film thickness hmin regardless of the gear ratio $\gamma$, and because the engine start control is initiated in the continuously variable transmission apparatus 1 by controlling the gear ratio $\gamma$ to the acceleration side from the maximum deceleration, it is possible to reduce the accumulated number of contacts of the first rotating member 10 and that of the sun roller 30.

In this embodiment, the engine ENG is started at the gear ratio $\gamma$ that is in the acceleration side from the maximum deceleration. In other words, in this embodiment, an engine controller EECU executes the engine start control in states where a transmission controller TECU controls the gear ratio $\gamma$ of the continuously variable transmission apparatus 1 to the acceleration side from the maximum deceleration before the engine start and where the accumulated number of contacts of the sun roller 30 whose frequency of occurrence of the interference of the projections is higher than the first rotating member 10 and the second rotating member 20 is reduced from the time of the maximum deceleration. Accordingly, it is possible in the continuously variable transmission apparatus 1 to increase the film thickness ratio A to be larger than 3 in a state where the accumulated number of contacts of the first rotating member 10 or the sun roller 30 is smaller than that at the time of the maximum deceleration, that is, it is possible for the lubricated condition to realize the fluid lubrication region.

However, if the current gear ratio $\gamma$ before the engine start is already in the acceleration side from the maximum deceleration, the current gear ratio $\gamma$ may be

in the acceleration side from a target gear ratio, depending on how to set the target gear ratio. At this time, gear change control to the target gear ratio becomes deceleration control, and the accumulated number of contacts of the first rotating member 10 and that of the sun roller 30 by the time when the lubricated condition realizes the fluid lubrication region are reduced from the time at the maximum deceleration but increased from the time at the current gear ratio $\gamma$. For example, in a case where such a target gear ratio is set according to a certain requirement (a requirement that is more important than suppression of damage on the rolling surface of the planetary ball 50 or the like), even when the accumulated number of contacts of the first rotating member 10 and that of the sun roller 30 are increased from the time at the current gear ratio $\gamma$, the accumulated number of contacts can be reduced from the time at the maximum deceleration to a maximum extent; therefore, the gear change control to the target gear ratio can simply be executed. However, when there is no such requirement, there is no necessity to execute the deceleration control and increase the accumulated number of contacts of the first rotating member 10 and that of the sun roller 30. Thus, in this example, the transmission controller TECU controls the gear ratio $\gamma$ of the continuously variable transmission apparatus 1 to the acceleration side from the current ratio before the engine start.

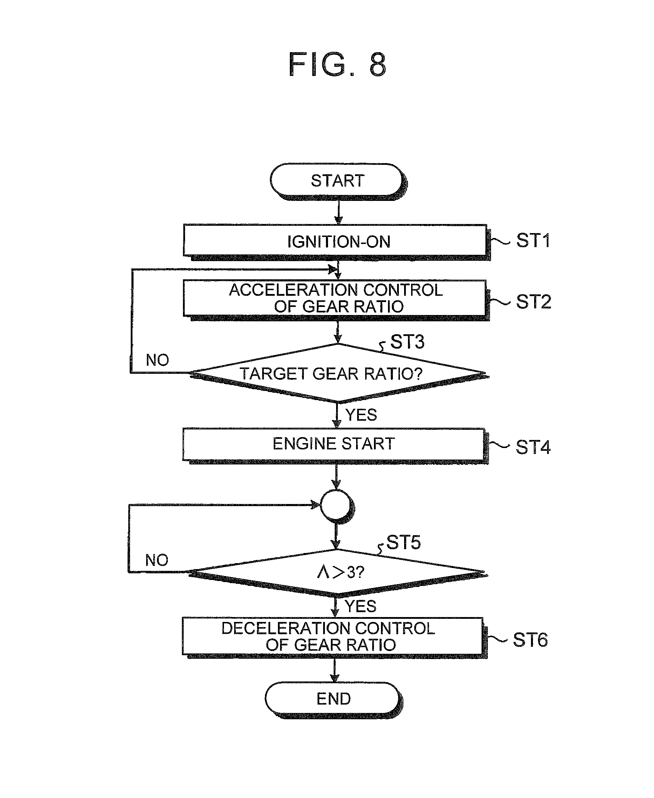

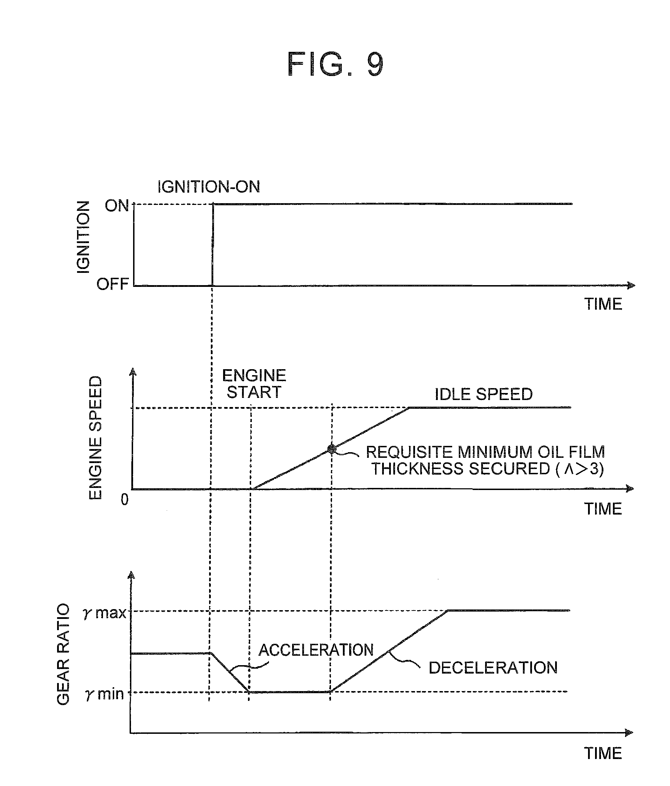

A specific description will hereinafter be made with reference to a flowchart in FIG. 8 and a time chart in FIG. 9.

When detecting an ignition-on signal (a step ST1), the transmission controller TECU controls the gear ratio $\gamma$ of the continuously variable transmission apparatus 1 to the target gear ratio in the acceleration side (a step ST2). In this example, a minimum gear ratio $\gamma$min is set as the target gear ratio, and gear ratio control is executed such that the gear ratio $\gamma$ is at the maximum acceleration (FIG. 9).

The transmission controller TECU determines whether or not the gear ratio $\gamma$ is controlled to the target gear ratio (a step ST3), and if the target gear ratio is not obtained, the gear ratio control is continued. On the other hand, once the gear ratio $\gamma$ becomes the target gear ratio, the control is taken over by the engine controller EECU from the transmission controller TECU, and the engine controller EECU executes the engine start control (a step ST4).

Then, the transmission controller TECU calculates the film thickness ratio $\Lambda$ and determines whether or not it becomes larger than 3 (a step ST5). Here, although each of the film thickness ratio A between the first rotating member 10 and the each planetary ball 50, between the second rotating member 20 and the each planetary ball 50, and between the sun roller 30 and the each planetary ball 50 may be calculated, the film thickness ratio A between the each planetary ball 50 and the sun roller 30 whose frequency of occurrence of the interference of the projections is higher than the first rotating member 10 and the second rotating member 20 is only calculated. Because values of the mean square surface roughness $\sigma$1, $\sigma$2 of the sun roller 30 and the planetary balls 50 can be obtained in advance, only the information on the peripheral velocity V of the sun roller 30 is acquired in the step ST5, and the minimum oil film thickness hmin between the sun roller 30 and the each planetary ball 50 according to the acquired peripheral velocity V is obtained from a map such as one shown in FIG. 4, for example, to calculate the film thickness ratio $\Lambda$ from the equation 1.

When the film thickness ratio $\Lambda$ is smaller than 3, the transmission controller TECU waits for the further increase in the peripheral velocity V of the sun roller 30 and repeats making the determination in the step ST5. Then, once the film thickness ratio A becomes larger than 3, the transmission controller TECU controls the gear ratio $\gamma$ of the continuously variable transmission apparatus 1 to the target gear ratio in the deceleration side (a step ST6). In other words, the deceleration control of the gear ratio $\gamma$ is executed in the continuously variable transmission apparatus 1 when the film thickness ratio A between the sun roller 30 and the each planetary ball 50 is larger than 3 in a period from the start of the engine ENG to the vehicle start. In this example, a maximum gear ratio $\gamma$max is set as the target gear ratio, and the deceleration control is executed to make the gear ratio $\gamma$ at the maximum deceleration (FIG. 9).

When operation of an accelerator by a driver is detected after the gear change control to the deceleration side, the clutch CL is engaged, and the vehicle is started.

As described above, in the continuously variable transmission apparatus 1, the gear ratio $\gamma$ is controlled to the acceleration side from the current gear ratio before the engine start, thus the peripheral velocity V of the each planetary ball 50 is increased, and the accumulated number of contacts of the sun roller 30 can be reduced; therefore, the lubricated condition between the sun roller 30 and the each planetary ball 50 can realize the fluid lubrication region with the reduced accumulated number of contacts. At this time, in the continuously variable transmission apparatus 1, the lubricated condition between the first rotating member 10 and the each planetary ball 50 and that between the second rotating member 20 and the each planetary ball 50 can also realize the fluid lubrication regions with the reduced accumulated number of contacts. Because it is thus possible in the continuously variable transmission apparatus 1 to lower rates of occurrence of damage on the rolling surfaces between the first rotating member 10 and the each planetary ball 50, between the second rotating member 20 and the each planetary ball 50, and between the sun roller 30 and the each planetary ball 50 in comparison with those before execution of the gear change control to the acceleration side during the engine start, the durability of these components can be improved. Especially, in this example, because the gear ratio $\gamma$ before the engine start is controlled to the minimum gear ratio $\gamma$min

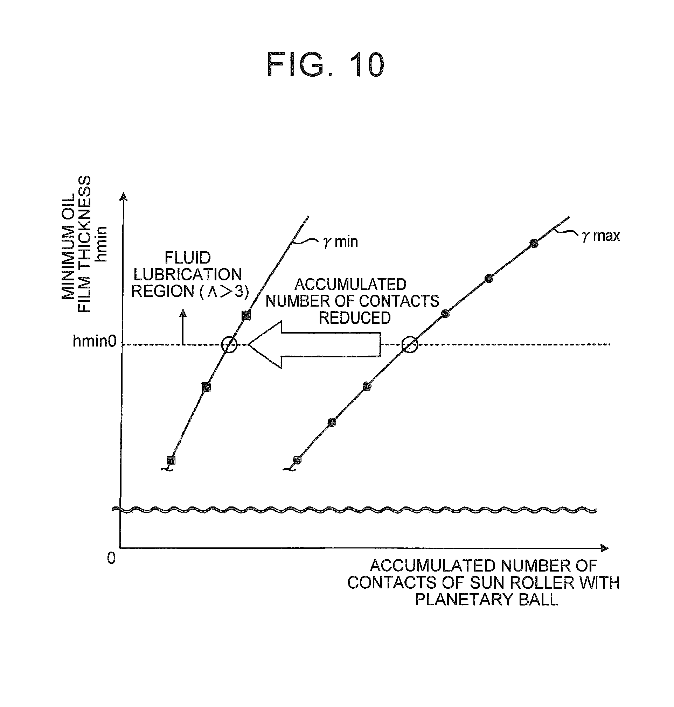

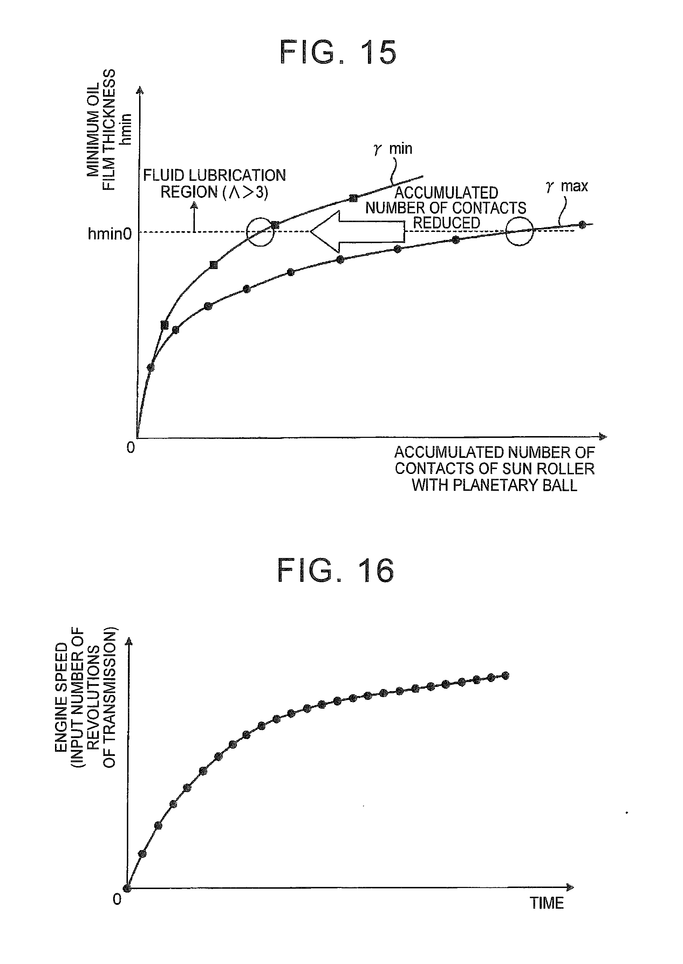

(maximum acceleration), and the lubricated condition thus realizes the fluid lubrication region with the minimum accumulated number of contacts of the sun roller 30 as shown in FIG. 10, the durability of the continuously variable transmission apparatus 1 is further improved. In addition, when the gear ratio $\gamma$ is at the maximum deceleration, the gear change control is executed to achieve the maximum acceleration, and a magnitude of reduction in the accumulated number of contacts becomes the largest; therefore, a margin of improvement of the durability becomes the largest. It should be noted that FIG. 10 is a partially enlarged view of FIG. 15, which will be described later.

Furthermore, the gear ratio $\gamma$ is controlled to the deceleration side in the continuously variable transmission apparatus 1 when the film thickness ratio A between the sun roller 30 and the each planetary ball 50 becomes larger than 3 and the lubricated condition realizes the fluid lubrication region. In other words, the gear ratio $\gamma$ is controlled to the deceleration side in the continuously variable transmission apparatus 1 when the minimum oil film thickness hmin between the sun roller 30 and the each planetary ball 50 becomes larger than a specified value (the boundary minimum oil film thickness hmin0). Accordingly, it is possible in the vehicle to generate the required drive torque for the start in the drive wheels when compared to a case where the gear ratio $\gamma$ is controlled to remain in the acceleration side. Especially, because the gear ratio $\gamma$ is controlled to the maximum gear ratio $\gamma$max in this example, the drive torque that is sufficient for the start can be generated in the drive wheels.

Here, in the continuously variable transmission apparatus 1, the deceleration control of the gear ratio $\gamma$ may be executed by using the film thickness ratio A between the first rotating member 10 and the each planetary ball 50 or the film thickness ratio A between the second rotating member 20 and the each planetary ball 50 instead of the film thickness ratio A between the sun roller 30 and the each planetary ball 50. In other words, in the continuously variable transmission apparatus 1, the deceleration control of the gear ratio $\gamma$ is executed when any of the film thickness ratio A between the first rotating member 10 and the each planetary ball 50, between the second rotating member 20 and the each planetary ball 50, and between the sun roller 30 and the each planetary ball 50 is higher than a specified value in the period from the start of the engine ENG to the vehicle start. At this time, while the specified value that is used to compare with the film thickness ratio A is 3 between the sun roller 30 and the each planetary ball 50, the film thickness ratio A between the first rotating member 10 and the each planetary ball 50 or between the second rotating member 20 and the each planetary ball 50 when the film thickness ratio A of the sun roller 30 becomes 3 is set as the specified value (> 3).

In a similar manner, in the continuously variable transmission apparatus 1, the deceleration control of the gear ratio $\gamma$ may be executed by using the minimum oil film thickness hmin between the first rotating member 10 and the each planetary ball 50 or the minimum oil film thickness hmin between the second rotating member 20 and the each planetary ball 50 instead of the minimum oil film thickness hmin between the sun roller 30 and the each planetary ball 50. In other words, in the continuously variable transmission apparatus 1, the deceleration control of the gear ratio $\gamma$ is executed when any of the minimum oil film thickness hmin between the first rotating member 10 and the each planetary ball 50, between the second rotating member 20 and the each planetary ball 50, and between the sun roller 30 and the each planetary ball 50 is larger than a specified value in the period from the start of the engine ENG to the vehicle start. As for a case between the sun roller 30 and the each planetary ball 50, the minimum oil film thickness hmin therebetween is compared to the specified value (boundary minimum oil film thickness hmin0) when initiation timing of the deceleration control of the gear ratio $\gamma$ is determined. The minimum oil film thickness hmin between the first rotating member 10 and the each planetary ball 50 or between the second rotating member 20 and the each planetary ball 50 when the minimum oil film thickness hmin of the sun roller 30 becomes the boundary minimum oil film thickness hmin0 is set as the specified value.

Furthermore, as described above, a correlative relationship is established between the minimum oil film thickness hmin and the peripheral velocity V. Thus, the deceleration control of the gear ratio $\gamma$ may be configured to be executed when the peripheral velocity V of either one of the first rotating member 10, the second rotating member 20, and the sun roller 30 exceeds a specified velocity in the period from the start of the engine ENG to the vehicle start. The peripheral velocity V can be calculated on the basis of the engine speed and the gear ratio $\gamma$. The peripheral velocity V when the minimum oil film thickness hmin between the sun roller 30 and the each planetary ball 50 becomes the boundary minimum oil film thickness hmin0 is set as the specified velocity that is compared to the peripheral velocity V. Here, the deceleration control of the gear ratio $\gamma$ may be initiated when the peripheral velocity V of the planetary ball 50 exceeds a specified velocity. Also in this case, the peripheral velocity V of the planetary ball 50 when the minimum oil film thickness hmin between the sun roller 30 and the each planetary ball 50 becomes the boundary minimum oil film thickness hmin0 is set as the specified velocity.

Moreover, a correlative relationship is established between the peripheral velocity V and the engine speed (input number of revolutions of the transmission). Thus, the deceleration control of the gear ratio $\gamma$ is executed to control the gear ratio $\gamma$ to the deceleration side when the engine speed (input number of revolutions of the transmission) exceeds a specified speed in the period from the start of the engine ENG to the vehicle start. The engine speed (input number of revolutions of the transmission) when the minimum oil film thickness hmin between the sun roller 30 and the each planetary ball 50 becomes the boundary minimum oil film thickness hmin0 is set as the specified speed.

[Modified Embodiment]

A description will be made on a modified embodiment of the continuously variable transmission apparatus 1 according to the embodiment. In the modified embodiment, a control mode is changed in the continuously variable transmission apparatus 1 that is structured the same as that in the embodiment.

In the embodiment described above, the gear ratio $\gamma$ of the continuously variable transmission apparatus 1 is controlled to the acceleration side from the maximum deceleration or to the acceleration side from the current gear ratio immediately before the start of the engine ENG. However, according to this, the engine start is delayed at least by the time required for the gear change control of the continuously variable transmission apparatus 1 from the time when the ignition-on signal is detected until the time when the engine ENG is actually started. In the modified embodiment, the gear change control is executed in advance during the engine stop, and thus the engine start delay is eliminated. A period during the engine stop includes periods before and after the stop of the engine ENG in addition to a period during the engine stop operation.

Here, if a clutch is interposed between the engine ENG and the continuously variable transmission apparatus 1, for example, the gear change control (control of the gear ratio $\gamma$ to the acceleration side from the maximum deceleration or to the acceleration side from the current gear ratio) can be executed after the engine stop. If the gear change control is executed in a period from the engine stop to the detection of the ignition-on signal, it is possible in the modified embodiment to eliminate degradation of responsiveness to the engine start from the time when the ignition-on signal is detected for the next time.

However, when the engine stop control is executed during traveling at the gear ratio $\gamma$ in the deceleration side from the maximum acceleration, especially at the maximum deceleration, for example, the peripheral velocity V of the first rotating member 10 or the sun roller 30 is reduced along with reduction in the speed of the engine ENG; therefore, the lubricated condition between the each planetary ball 50 and the first rotating member 10 or the sun roller 30 can no longer achieve the fluid lubrication, thereby causing the interference of the projections. In a period from the time when the fluid lubrication region can no longer be realized (that is, from the time when the film thickness ratio $\Lambda$ becomes 3) until the time when the continuously variable transmission apparatus 1 is stopped, the accumulated number of contacts of the first rotating member 10 or the sun roller 30 is increased as the gear ratio $\gamma$ approaches the deceleration side. Thus, the gear change control (control of the gear ratio $\gamma$ to the acceleration side from the maximum deceleration or to the acceleration side from the current gear ratio) is desirably executed before the engine stop.

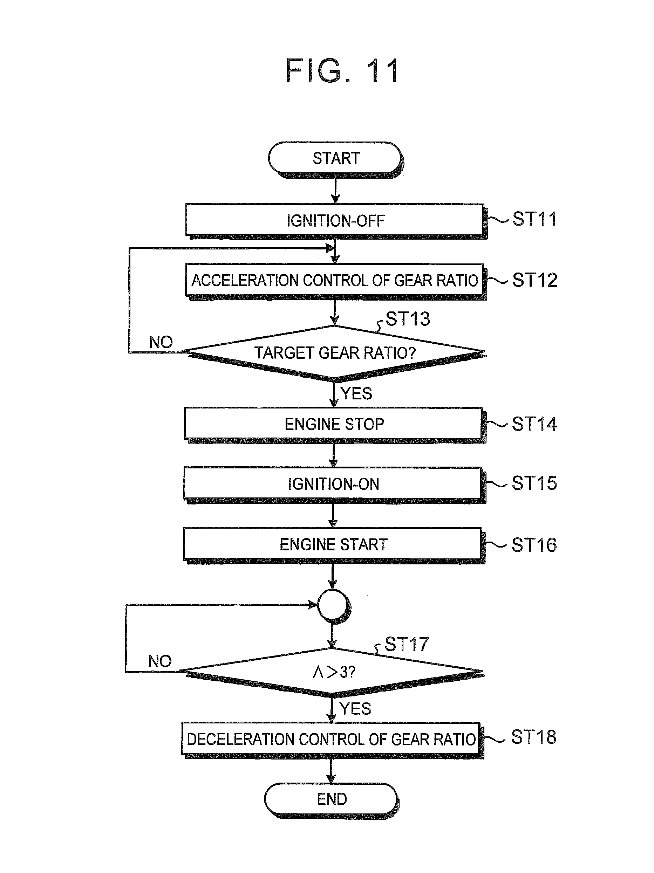

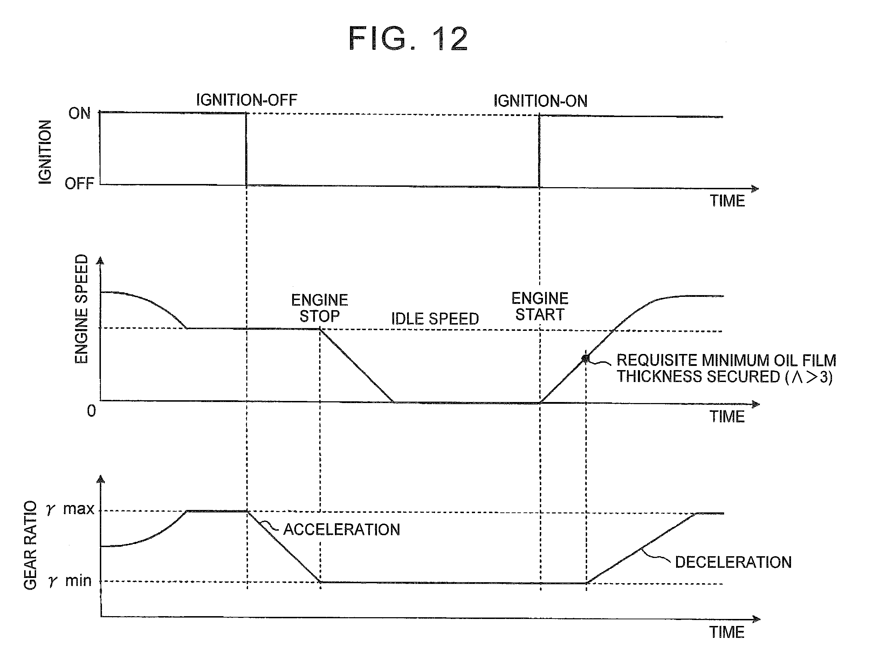

A specific description will hereinafter be made with reference to a flowchart in FIG. 11 and a time chart in FIG. 12. Here, the transmission controller TECU controls the gear ratio $\gamma$ of the continuously variable transmission apparatus 1 to the acceleration side from the current gear ratio before the engine stop.

When the ignition-on signal is no longer detected or when an ignition-off signal is detected (a step ST11), the transmission controller TECU controls the gear ratio $\gamma$ of the continuously variable transmission apparatus 1 to the target gear ratio in the acceleration side (a step ST12). In this example, the minimum gear ratio $\gamma$min is set as the target gear ratio, and the gear ratio control is executed to make the gear ratio $\gamma$ at the maximum acceleration (FIG. 12).

The transmission controller TECU determines whether or not the gear ratio $\gamma$ is controlled to the target gear ratio (a step ST13), and the gear ratio control is continued when the target gear ratio is achieved. Meanwhile, once the gear ratio $\gamma$ becomes the target gear ratio, control is taken over by the engine controller EECU from the transmission controller TECU, and the engine controller EECU executes the engine stop control (a step ST14).

Then, when the transmission controller TECU detects the ignition-on signal (a step ST15), the control is taken over by the engine controller EECU, and the engine controller EECU executes the engine start control (a step ST16).

As in the embodiment described above, the transmission controller TECU then calculates the film thickness ratio $\Lambda$ and determines whether or not it becomes larger than 3 (a step ST17). When the film thickness ratio $\Lambda$ is 3 or smaller, the transmission controller TECU waits for the further increase in the peripheral velocity V of the sun roller 30 and repeats making the determination in the step ST17. Once the film thickness ratio $\Lambda$ becomes larger than 3, the transmission controller TECU controls the gear ratio $\gamma$ of the continuously variable transmission apparatus 1 to the target gear ratio in the deceleration side (a step ST18). In this example, the maximum gear ratio $\gamma$max is set as the target gear ratio, and the gear ratio control is executed to make the gear ratio $\gamma$ at the maximum deceleration (FIG. 12). It should be noted that a determination to start the gear change control to the deceleration side may be executed in any of the modes described in the embodiment.

Once the operation of the accelerator by the driver is detected after the gear change control to the deceleration side, the clutch CL is engaged, and the vehicle is started.

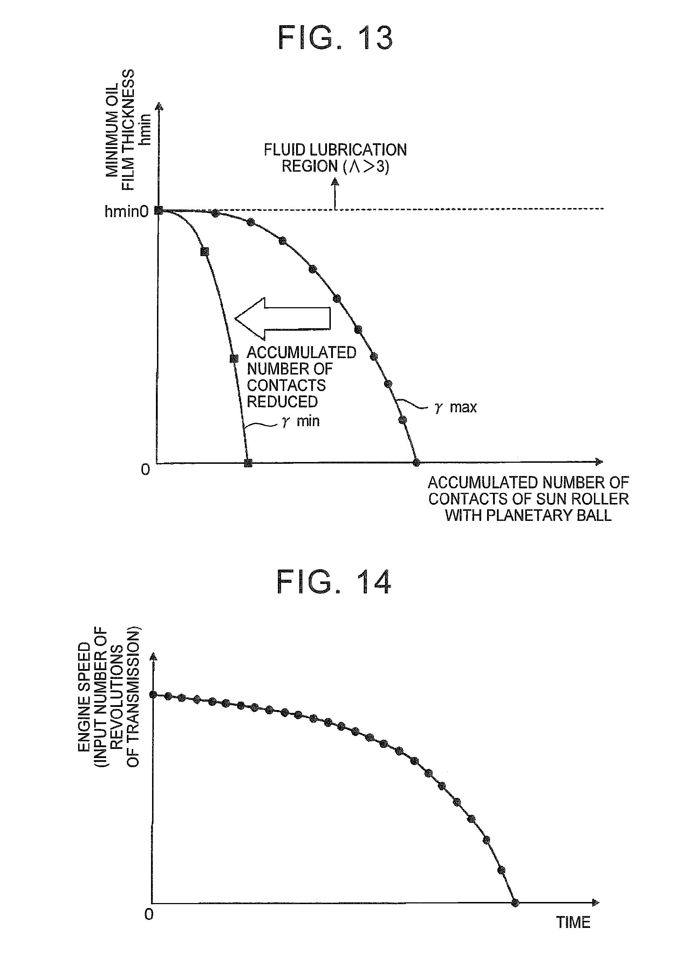

In the continuously variable transmission apparatus 1 of the modified embodiment, because the gear ratio $\gamma$ is controlled to the acceleration side from the maximum deceleration or to the acceleration side from the current gear ratio before the engine stop, the engine ENG can be stopped with the reduced accumulated number of contacts of the sun roller 30. In addition, in the continuously variable transmission apparatus 1, the accumulated number of contacts of the first rotating member 10 and that of the second rotating member 20 are also reduced during the engine stop. Accordingly, in the continuously variable transmission apparatus 1 of the modified embodiment, because it is possible to lower the rates of occurrence of damage on the rolling surfaces between the first rotating member 10 and the each planetary ball 50, between the second rotating member 20 and the each planetary ball 50, and between the sun roller 30 and the each planetary ball 50 in comparison with those before execution of the gear change control to the acceleration side during the engine stop, the durability of these components can be improved. Especially, in this example, because the gear ratio $\gamma$ before the engine stop is controlled to the minimum gear ratio $\gamma$min (maximum acceleration), and the engine ENG can be stopped with the minimum accumulated number of contacts of the sun roller 30 as shown in FIG. 13, the durability of the continuously variable transmission apparatus 1 is further improved. FIG 13 shows an example of a relationship between the minimum oil film thickness hmin and the accumulated number of contacts of the sun roller 30 in a characteristic at the stop of the engine ENG shown in FIG. 14. In addition, when the gear ratio $\gamma$ is at the maximum deceleration, the gear change control is executed to achieve the maximum acceleration, and the magnitude of reduction in the accumulated number of contacts becomes the largest; therefore, the margin of improvement of the durability becomes the largest.

Furthermore, in the continuously variable transmission apparatus 1 of the modified embodiment, because the gear ratio $\gamma$ is controlled to the acceleration side in advance during the engine stop, the lubricated conditions between the first rotating member 10 and the each planetary ball 50, between the second rotating member 20 and the each planetary ball 50, and between the sun roller 30 and the each planetary ball 50 can realize the fluid lubrication regions with the reduced accumulated number of contacts when the engine is started later. Accordingly, in the continuously variable transmission apparatus 1, because it is possible to lower the rates of occurrence of damage on the rolling surfaces between the first rotating member 10 and the each planetary ball 50, between the second rotating member 20 and the each planetary ball 50, and between the sun roller 30 and the each planetary ball 50 during the engine start in comparison with those before the execution of the gear change control to the acceleration side during the engine stop, the durability of these components can be improved. Especially, in this example, because the gear ratio $\gamma$ is controlled to the minimum gear ratio $\gamma$min (maximum acceleration) before the engine start, and the lubricated condition can realize the fluid lubrication region with the minimum accumulated number of contacts of the sun roller 30 as shown in FIG. 15, the durability of the continuously variable transmission apparatus 1 is further improved. FIG. 15 shows an example of a relationship between the minimum oil film thickness hmin and the accumulated number of contacts of the sun roller 30 in a characteristic at the start of the engine ENG shown in FIG. 16. In addition, when the gear ratio $\gamma$ during the engine stop and before the gear change control is at the maximum deceleration, the gear change control is executed to achieve the maximum acceleration, and the magnitude of reduction in the accumulated number of contacts becomes the largest; therefore, the margin of improvement of the durability becomes the largest.

According to the continuously variable transmission apparatus 1 of the modified embodiment that has been described so far, it is possible to reduce the accumulated number of contacts of the first and second rotating members 10, 20 and the sun roller 30 during the engine stop and during the engine start thereafter by controlling the gear ratio $\gamma$ to the acceleration side from the maximum deceleration or to the acceleration side from the current gear ratio in advance before the engine stop; therefore, the rate of occurrence of damage on the rolling surfaces between the each planetary ball 50 and each of the first and second rotating members 10, 20 and the sun roller 30 is substantially reduced from that in the above-mentioned embodiment, and thus the durability of these components can be improved. Furthermore, according to the continuously variable transmission apparatus 1 of the modified embodiment, because the gear change control needs not be executed to make the gear ratio $\gamma$ to the acceleration side from the maximum deceleration or to the acceleration side from the current gear ratio after the detection of the ignition-on signal, it is possible to improve the responsiveness to the engine start after the detection of the ignition-on signal in comparison with the above-mentioned embodiment.

The description has been made in the above-mentioned embodiment and the modified embodiment on the gear change control during the engine start in a state that the vehicle is stopped (also during the engine stop in the state that the vehicle is stopped in the modified embodiment). However, the gear change control of the continuously variable transmission apparatus 1 described in the embodiment and the modified embodiment may be applied to the time when the engine is started or the engine is stopped during traveling. The engine start or the engine stop during traveling is executed during so-called inertia traveling in which the vehicle runs with the stopped engine ENG for improvement of fuel efficiency. The stopped engine ENG is started to terminate the inertia traveling. Thus, due to the same reason as that in the embodiment and the modified embodiment, the durability of the continuously variable transmission apparatus 1 can be improved even when the inertia traveling is terminated by executing the gear change control of the continuously variable transmission apparatus 1 in the embodiment (control of the gear ratio $\gamma$ to the acceleration side from the maximum deceleration or to the acceleration side from the current gear ratio) before the engine start or by executing the gear change control of the continuously variable transmission apparatus 1 in the modified embodiment (control of the gear ratio $\gamma$ to the acceleration side from the maximum deceleration or to the acceleration side from the current gear ratio) at the beginning of the inertia traveling during the engine stop. In addition, the engine ENG is stopped during traveling to start the inertia traveling. Accordingly, the durability of the continuously variable transmission apparatus 1 can also be improved at the beginning of the inertia traveling by executing the gear change control of the continuously variable transmission apparatus 1 in the modified embodiment during the engine stop. Furthermore, when the inertia traveling is terminated, it is desired to eliminate the delay in the responsiveness to the engine start to the maximum extent. Thus, the gear change control during the engine stop in the modified embodiment is preferably applied during the inertia traveling. This allows the improvement in the durability of the continuously variable transmission apparatus 1 without sacrificing the responsiveness to the engine start.

In the embodiment and the modified embodiment described above, the deceleration control of the gear ratio $\gamma$ is executed from the engine start to the vehicle start on the basis of the minimum oil film thickness hmin (film thickness ratio $\Lambda$), the engine speed, and the like. Here, detection sensors or the like of the peripheral velocity and the engine speed are necessary to obtain the minimum oil film thickness hmin, the engine speed, and the like. Thus, the deceleration control of the gear ratio $\gamma$ may be executed after a lapse of a specified time period from the engine start (for example, the beginning of the engine start). The specified time period may be obtained in advance from an experiment or a simulation, for example, and may be set as a time period from a time when the engine is started until a time when the film thickness ratio A exceeds 3. In this case, even if the peripheral velocity, the engine speed, or the like cannot be detected, the deceleration control of the gear ratio $\gamma$ can be executed.

Furthermore, the description has been made on the gear change control of the continuously variable transmission apparatus 1 that includes the continuously variable transmission mechanism of the ball planetary type in the embodiment and the modified embodiment described above. However, the same gear change control may be applied to the continuously variable transmission apparatus of the toroidal type that includes the input disc as the second rotating element, the output disc as the second rotating element, and the power roller as the rolling member. In addition, the continuously variable transmission apparatus of the toroidal type may include either the continuously variable transmission mechanism of a full toroidal type or that of a half toroidal type.

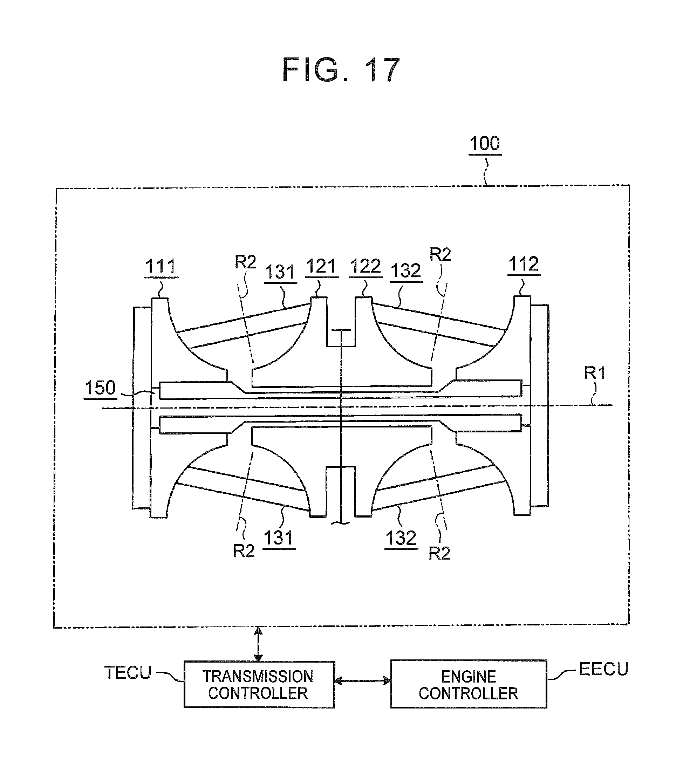

A reference numeral 100 in FIG. 17 represents an example of the continuously variable transmission apparatus of the toroidal type, and main components thereof is shown in the drawing. The continuously variable transmission apparatus 100 includes input discs 111, 112 as the first rotating elements, output discs 121, 122 as the second rotating elements, power rollers 131, 132 as the rolling members, and a shaft 150 as an input shaft to which the output torque of the engine ENG is transferred.

In the continuously variable transmission apparatus 100, the input discs 111, 112, the output discs 121, 122, and the shaft 150 share the first rotation center axis R1, and each of the power rollers 131, 132 has the second rotation center axis R2. The first rotation center axis R1 and the second rotation center axis R2 are disposed on a same plane. The same plane is formed for each of the power rollers 131, 132. In the continuously variable transmission apparatus 100, the gear ratio $\gamma$ between the input side and the output side varies by tilting the power rollers 131, 132 with respect to the first rotation center axis R1 on the same plane.

In the vehicle in which the continuously variable transmission apparatus 1 in FIG. 5 is replaced by the continuously variable transmission apparatus 100, the continuously variable transmission apparatus 100 controls the gear ratio $\gamma$ to the acceleration side from the maximum deceleration or to the acceleration side from the current gear ratio in the period from the ignition-on to the engine start or during the engine stop as in the embodiment or the modified embodiment described above. Accordingly, it is also in the continuously variable transmission apparatus 100 to obtain the same effect as that in the continuously variable transmission apparatus of the embodiment or the modified embodiment described above. In other words, in the continuously variable transmission apparatus 100, the accumulated number of contacts at a point on a rolling surface of the input disc 111 with the power roller 131 (accumulated number of contacts of the input disc 111), the accumulated number of contacts at a point on a rolling surface of the input disc 112 with the power roller 132 (accumulated number of contacts of the input disc 112), the accumulated number of contacts at a point on a rolling surface of the output disc 121 with the power roller 131 (accumulated number of contacts of the output disc 121), and the accumulated number of contacts at a point on a rolling surface of the output disc 122 with the power roller 132 (accumulated number of contacts of the output disc 122) are reduced, and thus the lubricated states therebetween can realize the fluid lubrication regions. Thus, it is possible to lower the rates of occurrence of damage on the rolling surfaces therebetween; therefore, the durability of these components can be improved.

In addition, in the continuously variable transmission apparatus 100, because the gear ratio $\gamma$ is controlled to the acceleration side from the maximum deceleration or to the acceleration side from the current gear ratio during the engine stop as in the above-mentioned modified embodiment, there is no necessity to control the gear ratio $\gamma$ to the acceleration side from the maximum deceleration or to the acceleration side from the current gear ratio after the detection of the ignition-on signal. Therefore, it is possible to avoid the degradation of responsiveness to the engine start after the detection of the ignition-on signal.

Furthermore, in the continuously variable transmission apparatus 100, because the gear ratio $\gamma$ is controlled to the acceleration side from the maximum deceleration or to the acceleration side from the current gear ratio before the engine stop as in the above-mentioned modified embodiment, the engine ENG can be stopped with the reduced accumulated numbers of contacts of the input discs 111, 112 and the output discs 121, 122. Therefore, in the continuously variable transmission apparatus 100, because the rate of occurrence of damage on the rolling surfaces between the input disc 111 and the power roller 131, between the input disc 112 and the power roller 132, between the output disc 121 and the power roller 131, or between the output disc 122 and the power roller 132 can be lowered during the engine stop, the durability of these components can be improved.

Moreover, in the continuously variable transmission apparatus 100, when any of the film thickness ratios A between the input disc 111 and the power roller 131, between the input disc 112 and the power roller 132, between the output disc 121 and the power roller 131, and between the output disc 122 and the power roller 132 becomes larger than 3 in the period from the start of the engine ENG to the vehicle start as in the embodiment or the modified embodiment described above, the lubricated condition therebetween realizes the fluid lubrication region, and thus the gear ratio $\gamma$ is controlled to the deceleration side. Therefore, in the vehicle, in comparison with a case where the gear ratio $\gamma$ remains to be controlled to the acceleration side, the drive torque necessary for the start-up can be generated in the drive wheels.

Also in the continuously variable transmission apparatus 100, the deceleration control of the gear ratio $\gamma$ may be executed when the minimum oil film thickness $h_{min}$ between the input disc 111 and the power roller 131, between the input disc 112 and the power roller 132, between the output disc 121 and the power roller 131, or between the output disc 122 and the power roller 132 is larger than the specified value (boundary minimum oil film thickness $h_{min0}$) in the period from the start of the engine ENG to the vehicle start. In addition, the deceleration control of the gear ratio $\gamma$ may be executed when the peripheral velocity of the input disc 111, the input disc 112, the output disc 121, or the output disc 122 exceeds the specified velocity in the period from the start of the engine ENG to the vehicle start. Furthermore, the deceleration control of the gear ratio $\gamma$ may be executed when the engine speed (input number of revolutions of the transmission) exceeds the specified speed in the period from the start of the engine ENG to the vehicle start. Moreover, the deceleration control of the gear ratio $\gamma$ may be executed after a lapse of the specified time period from the engine start in the period from the start of the engine ENG to the vehicle start.

Also in the continuously variable transmission apparatus 100, the acceleration control and the deceleration control of the gear ratio $\gamma$ may be executed during the inertia traveling in addition to in the state that the vehicle is stopped.

DESCRIPTION OF THE REFERENCE NUMERALS AND SYMBOLS

| | |
|---|---|
| 1,100: | CONTINUOUSLY VARIABLE TRANSMISSION APPARATUS |
| 10: | FIRST ROTATING MEMBER (FIRST ROTATING ELEMENT) |
| 11: | INPUT SHAFT |
| 20: | SECOND ROTATING MEMBER (SECOND ROTATING ELEMENT) |
| 21: | OUTPUT SHAFT |
| 30: | SUN ROLLER (THIRD ROTATING ELEMENT) |
| 40: | CARRIER (FOURTH ROTATING ELEMENT) |
| 50: | PLANETARY BALLS (ROLLING MEMBERS) |
| 51: | SUPPORT SHAFT |
| 60: | SHAFT (TRANSMISSION APPARATUS SHAFT) |
| 80: | IRIS PLATE |
| 111, 112: | INPUT DISC (FIRST ROTATING ELEMENT) |
| 121, 122: | OUTPUT DISC (SECOND ROTATING ELEMENT) |
| 131, 132: | POWER ROLLER (ROLLING MEMBERS) |
| CL: | CLUTCH |
| EECU: | ENGINE CONTROLLER |
| ENG: | ENGINE |
| R1: | FIRST ROTATION CENTER AXIS |
| R2: | SECOND ROTATION CENTER AXIS |
| TECU: | TRANSMISSION CONTROLLER |

**Claims**

1.  A continuously variable transmission apparatus comprising
    a continuously variable transmission mechanism of a traction drive type including:

        a transmission apparatus shaft serving as a center of rotation;
        first and second rotating elements disposed to face each other on the transmission apparatus shaft, sharing a first rotation center axis, and capable of relative rotation;
        plural rolling members having a second rotation center axis, radially disposed around the first rotation center axis as the center, and held between the first and second rotating elements; and

a transmission device for changing a gear ratio between an input shaft on an engine side and an output shaft on a drive wheel side by tilting the each rolling member with respect to the first rotation center axis,

wherein the engine is started at a gear ratio in an acceleration side from maximum deceleration.

2. The continuously variable transmission apparatus according to claim 1 wherein the gear ratio is controlled to the acceleration side in a period from ignition-on to the engine start.

3. The continuously variable transmission apparatus according to claim 1 wherein the gear ratio is controlled to the acceleration side in the period from the engine stop to the ignition-on or before the engine stop.

4. The continuously variable transmission apparatus according to any one of claims 1 to 3 wherein the continuously variable transmission mechanism is a continuously variable transmission mechanism of a ball planetary type that further includes: a support shaft for the rolling member that has the second rotation center axis and both ends of which is projected from the rolling member; a third rotating element having an outer peripheral surface on which each of the rolling member is disposed and capable of relative rotation to the transmission apparatus shaft and the first and second rotating elements; and a fourth rotating element holding the rolling member in a freely tilting manner via projected sections of the support shaft and capable of relative rotation to the transmission apparatus shaft and the first to third rotating elements.

5. The continuously variable transmission apparatus according to any one of claims 1 to 3 wherein the continuously variable transmission mechanism is a continuously variable transmission mechanism of a full toroidal type or of a half toroidal type.

6. The continuously variable transmission apparatus according to any one of claims 1 to 5 wherein the gear ratio is controlled to a deceleration side in a period from the engine start to the vehicle start.

7. The continuously variable transmission apparatus according to claim 6 wherein the gear ratio is controlled to the deceleration side when the engine speed exceeds a specified speed.

8. The continuously variable transmission apparatus according to claim 6 wherein the gear ratio is controlled to the deceleration side after a lapse of a specified time period from the engine start.

9. The continuously variable transmission apparatus according to claim 4 wherein the gear ratio is controlled to a deceleration side when a peripheral velocity of the first rotating element exceeds a specified velocity, when a peripheral velocity of the second rotating element exceeds the specified velocity, when a peripheral velocity of the third rotating element exceeds the specified velocity, or when a peripheral velocity of the rolling member exceeds the specified velocity in the period from the engine start to the vehicle start.

10. The continuously variable transmission apparatus according to claim 5 wherein the gear ratio is controlled to a deceleration side when a peripheral velocity of the first rotating member exceeds a specified velocity, when a peripheral velocity of the second rotating element exceeds the specified velocity, or when a peripheral velocity of the rolling member exceeds the specified velocity in the period from the engine start to the vehicle start.

11. The continuously variable transmission apparatus according to claim 4 wherein the gear ratio is controlled to a deceleration side when an oil film thickness between the first rotating element and the each rolling member becomes larger than a specified value, when an oil film thickness between the second rotating element and the each rolling member becomes larger than the specified value, or when an oil film thickness between the third rotating element and the each rolling member becomes larger than the specified value in the period from the engine start to the vehicle start.

12. The continuously variable transmission apparatus according to claim 11 wherein each of the oil film thicknesses are calculated on the basis of a function with an average of a peripheral velocity of the first rotating member and a peripheral velocity of the rolling member as a parameter, a function with an average of a peripheral velocity of the second rotating element and the peripheral velocity of the rolling member as a parameter, or a function with an average of a peripheral velocity of the third rotating element and the peripheral velocity of the rolling member as a parameter.

13. The continuously variable transmission apparatus according to claim 5 wherein the gear ratio is controlled to a deceleration side when an oil film thickness between the first rotating element and the each rolling member becomes larger than a specified value or when an oil film thickness between the second rotating element and the each rolling member becomes larger than the specified value in the period from the engine start to the vehicle start.

**14.** The continuously variable transmission apparatus according to claim 13 wherein each of the oil film thicknesses is calculated on the basis of a function with an average of a peripheral velocity of the first rotating element and a peripheral velocity of the rolling member as a parameter or a function with an average of a peripheral velocity of the second rotating element and the peripheral velocity of the rolling member as a parameter.

**15.** The continuously variable transmission apparatus according to any one of claims 1 to 14 wherein a clutch that can connect or disconnect torque is provided between the output shaft and the drive wheel.

**16.** The continuously variable transmission apparatus according to claim 1 or 2 wherein, during the engine start, a gear ratio is controlled to an acceleration side from the gear ratio immediately before beginning of the engine start.

EP 2 759 746 A1

# FIG. 1

TECU — TRANSMISSION CONTROLLER ⟷ ENGINE CONTROLLER — EECU

18

# FIG. 2

# FIG. 3

DURING
MAXIMUM
DECELERATION

DURING
MAXIMUM
ACCELERATION

ACCELERATION
SIDE

DECELERATION
SIDE

# FIG. 4

MINIMUM OIL FILM THICKNESS hmin

FLUID LUBRICATION REGION (Λ>3)

hmin0

0

PERIPHERAL VELOCITY V

# FIG. 5

ENG — ENGINE

1 — CONTINUOUSLY VARIABLE TRANSMISSION APPARATUS

CL — CLUTCH

OUTPUT

# FIG. 6

# FIG. 7

EP 2 759 746 A1

# FIG. 8

```
        ┌──────────┐
        │  START   │
        └────┬─────┘
             ▼
    ┌───────────────────┐
    │   IGNITION-ON     │ ─── ST1
    └────────┬──────────┘
             ▼
    ┌───────────────────┐
    │ ACCELERATION CONTROL │ ─── ST2
    │   OF GEAR RATIO   │
    └────────┬──────────┘
             ▼ ST3
   NO   ◇ TARGET GEAR RATIO? ◇
    ◄────
             │ YES
             ▼
    ┌───────────────────┐
    │   ENGINE START    │ ─── ST4
    └────────┬──────────┘
             ▼
            (○)
             ▼ ST5
   NO   ◇    Λ>3?    ◇
    ◄────
             │ YES
             ▼
    ┌───────────────────┐
    │ DECELERATION CONTROL │ ─── ST6
    │   OF GEAR RATIO   │
    └────────┬──────────┘
             ▼
        ┌──────────┐
        │   END    │
        └──────────┘
```

23

# FIG. 9

IGNITION-ON

IGNITION
ON
OFF
TIME

ENGINE SPEED
ENGINE START
IDLE SPEED
REQUISITE MINIMUM OIL FILM THICKNESS SECURED ($\Lambda > 3$)
0
TIME

GEAR RATIO
$\gamma$ max
$\gamma$ min
ACCELERATION
DECELERATION
TIME

# FIG. 10

# FIG. 11

```
                    ┌──────────┐
                    │  START   │
                    └────┬─────┘
                         ↓
        ┌────────────────────────────────┐
        │         IGNITION-OFF            │───── ST11
        └────────────────┬───────────────┘
                         ↓
   ┌───→┌────────────────────────────────┐
   │    │  ACCELERATION CONTROL OF GEAR RATIO │──── ST12
   │    └────────────────┬───────────────┘
   │                     ↓          ST13
   │            ◇──────────────────◇
   │  NO ←──────  TARGET GEAR RATIO?  
   │            ◇──────────────────◇
   │                     │ YES
   │                     ↓
   │    ┌────────────────────────────────┐
   │    │         ENGINE STOP            │──── ST14
   │    └────────────────┬───────────────┘
   │                     ↓
   │    ┌────────────────────────────────┐
   │    │         IGNITION-ON            │──── ST15
   │    └────────────────┬───────────────┘
   │                     ↓
   │    ┌────────────────────────────────┐
   │    │         ENGINE START          │──── ST16
   │    └────────────────┬───────────────┘
   │                     ↓
   ┌──→ ○
   │                     ↓          ST17
   │            ◇──────────────────◇
   │  NO ←──────      Λ > 3?        
   │            ◇──────────────────◇
   │                     │ YES
   │                     ↓
        ┌────────────────────────────────┐
        │ DECELERATION CONTROL OF GEAR RATIO │──── ST18
        └────────────────┬───────────────┘
                         ↓
                    ┌──────────┐
                    │   END    │
                    └──────────┘
```

# FIG. 12

IGNITION-OFF                    IGNITION-ON

IGNITION

ON

OFF

TIME

ENGINE SPEED

ENGINE STOP    IDLE SPEED    ENGINE START

REQUISITE MINIMUM OIL FILM THICKNESS SECURED ($\Lambda > 3$)

0

TIME

GEAR RATIO

$\gamma$ max

ACCELERATION

DECELERATION

$\gamma$ min

TIME

EP 2 759 746 A1

# FIG. 13

# FIG. 14

# FIG. 15

MINIMUM OIL FILM THICKNESS hmin

FLUID LUBRICATION REGION (Λ>3)

γ min

ACCUMULATED NUMBER OF CONTACTS REDUCED

γ max

hmin0

ACCUMULATED NUMBER OF CONTACTS OF SUN ROLLER WITH PLANETARY BALL

# FIG. 16

ENGINE SPEED (INPUT NUMBER OF REVOLUTIONS OF TRANSMISSION)

TIME

FIG. 17

## INTERNATIONAL SEARCH REPORT

International application No.

PCT/JP2011/071688

A. CLASSIFICATION OF SUBJECT MATTER
*F16H61/02*(2006.01)i

According to International Patent Classification (IPC) or to both national classification and IPC

B. FIELDS SEARCHED

Minimum documentation searched (classification system followed by classification symbols)
F16H61/02

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-36847 A  (Toyota Motor Corp.),<br>18 February 2010 (18.02.2010),<br>claims 1, 3<br>(Family: none) | 1,5,16<br>4,15 |
| Y | JP 2011-153649 A  (Toyota Motor Corp.),<br>11 August 2011 (11.08.2011),<br>paragraphs [0020] to [0033]; fig. 1<br>(Family: none) | 4,15 |
| Y | JP 5-280627 A  (Mazda Motor Corp.),<br>26 October 1993 (26.10.1993),<br>paragraph [0032]; fig. 1<br>& EP 0563941 A1 | 15 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 November, 2011 (04.11.11) | 15 November, 2011 (15.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/071688

C (Continuation).　DOCUMENTS CONSIDERED TO BE RELEVANT

| Category* | Citation of document, with indication, where appropriate, of the relevant passages | Relevant to claim No. |
|---|---|---|
| A | JP 4-285360 A　(Nippondenso Co., Ltd.),<br>09 October 1992 (09.10.1992),<br>paragraph [0025]<br>(Family: none) | 1-16 |
| A | JP 2001-99291 A　(Nissan Motor Co., Ltd.),<br>10 April 2001 (10.04.2001),<br>entire text; all drawings<br>& US 6478712 B1　　　　& WO 2001/023783 A1<br>& CN 1327524 A | 1-16 |
| A | JP 2010-30349 A　(Toyota Motor Corp.),<br>12 February 2010 (12.02.2010),<br>entire text; all drawings<br>(Family: none) | 1-16 |
| A | JP 2007-32774 A　(NSK Ltd.),<br>08 February 2007 (08.02.2007),<br>entire text; all drawings<br>(Family: none) | 1-16 |
| A | JP 2009-255806 A　(Toyota Motor Corp.),<br>05 November 2009 (05.11.2009),<br>entire text; all drawings<br>(Family: none) | 1-16 |

Form PCT/ISA/210 (continuation of second sheet) (July 2009)

**INTERNATIONAL SEARCH REPORT**

International application No.

PCT/JP2011/071688

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The technical feature common to the invention of claim 1 and the invention of claim 3 is "a start of an engine with a transmission gear ratio of an acceleration side instead of most deceleration". However, the afore-said technical feature does not make a contribution over the prior art in the light of the contents disclosed in the document 1 (JP 2010-36847 A (Toyota Motor Corp.), 18 February 2010 (18.02.2010), claim 1), and therefore cannot be considered to be a special technical feature. Further, there is no other same or corresponding special technical feature between these inventions.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007032774 A
- JP 5280627 A
- JP 62171556 A
- JP 11063183 A
- JP 10184837 A

**Non-patent literature cited in the description**

- **YAMAMOTO, YUJI ; KANETA, MOTOHIRO.** Tribology. Rikogakusha Publishing, Co., Ltd, 1998, 28, 124-126